(19) **Europäisches Patentamt / European Patent Office / Office européen des brevets**

(11) **EP 1 895 119 B1**

(12) **EUROPEAN PATENT SPECIFICATION**

(45) Date of publication and mention of the grant of the patent:
**10.12.2008 Bulletin 2008/50**

(51) Int Cl.:
**F01N 3/021** *(2006.01)* **F01N 3/28** *(2006.01)*

(21) Application number: **07012055.5**

(22) Date of filing: **20.06.2007**

(54) **Holding sealer and exhaust gas processing device**

Halteabdichtung und Abgasbehandlungsvorrichtung

Joint de maintien et dispositif de traitement des gaz d'échappement

(84) Designated Contracting States:
**DE FR GB**

(30) Priority: **24.08.2006 JP 2006228153**

(43) Date of publication of application:
**05.03.2008 Bulletin 2008/10**

(73) Proprietor: **IBIDEN CO., LTD.**
**Ogaki-shi**
**Gifu 503-8604 (JP)**

(72) Inventor: **Sugino, Junichi**
**c/o IBIDEN Gama Plant**
**Ogaki-shi**
**Gifu 503-8559 (JP)**

(74) Representative: **HOFFMANN EITLE**
**Patent- und Rechtsanwälte**
**Arabellastrasse 4**
**81925 München (DE)**

(56) References cited:
**WO-A-20/06008855     WO-A-20/06020058**
**US-A- 4 093 423**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

This invention generally relates to a holding sealer having a mat base member including inorganic fibers and a protective sheet placed on a surface of the mat base member, also an exhaust gas processing device including such a holding sealer.

2. Description of the Related Art

The number of cars has been greatly increasing since the beginning of this century, and the amount of exhaust gas from car engines has been increasing amazingly along with the increasing number of cars. Especially, various materials in the exhaust gas from diesel engines trigger environmental pollution, so that these materials are currently seriously influencing the global environment.

Under these circumstances, various exhaust gas processing devices have been suggested, and these have been used practically. A typical exhaust gas processing device has a casing (for example, made of metal and the like) on a exhaust pipe connected to an exhaust gas manifold of the engine, in which casing an exhaust gas processing body having lots of cells, which are divided by cell walls, is arranged thereon. Typically, these cells are in a honeycomb structure; in this case, the exhaust gas processing body is called a honeycomb structure body. As an example of the exhaust gas processing body, there are an exhaust gas filter such as a catalyst carrier and a diesel particulate filter (DPF) and the like. For example, in the case of DPF, particles are trapped by cell walls during the exhaust gas passing through the exhaust gas processing body via each cell based on the above structure; thereby particles can be removed from the exhaust gas. Structural materials of the exhaust gas processing body are metals, alloys, ceramics, etc. As a typical example of the exhaust gas processing body comprising ceramics, a honeycomb filter made by cordierite is known. Recently, from the viewpoint of heat resistance, mechanical strength, chemical stability, etc., a porous silundum sintering body is used as the exhaust gas processing body.

Usually, the holding sealer is placed between the above exhaust gas processing body and the casing. The holding sealer is used for protecting against breakage due to contact of the exhaust gas processing body with an inner surface of the casing during vehicle runs, and for protecting against leakage of the exhaust gas from a gap between the casing and the exhaust gas processing body. Also, the holding sealer plays an important role for preventing the exhaust gas processing body from falling off due to the exhaust pressure of the exhaust gas. Moreover, the exhaust gas processing body needs to keep high temperature for stabilizing the reaction, and also the holding sealer needs to be heat resistant. As a structural member satisfying these requirements, there is a sheet member including inorganic fibers such as alumina system fiber, etc.

The holding sealer is wound around at least a portion of an outer surface except an open surface of the exhaust gas processing body, for example, both edges of the holding sealer are engaged, and the holding sealer is used by fixing as one body with the exhaust gas processing body by means of taping. Then, the one whole body is assembled into the exhaust gas processing device by being pressed into the casing.

Here, when the holding sealer is wound around the outer surface of the exhaust gas processing body, some tension occurs in the holding sealer along the winding direction. This tension occurs remarkably on a surface which is the outside of the holding sealer due to the different circumference lengths (difference between an outer circumference length and an inner circumference length). Because of this, when the strength of the holding sealer is not enough, cracks may occur on the outer surface of the holding sealer especially at the time of winding the holding sealer around the exhaust gas processing body. Leakage of the unprocessed exhaust gas occurs because such cracks decrease the sealing ability of the holding sealer.

Because of this, in order to prevent the leakage of non-processed exhaust gas due to the occurrence of such cracks, for example, it is proposed to provide a protective sheet having flexibility on the surface of the contacting side (i.e., on the outer circumference side) with an inner wall of the casing of the holding sealer (For example, see Patent Document 1). The following method is disclosed in the above patent document. In this method, the occurrence of cracks on the outer circumference side of the holding sealer is restricted due to the protective sheet having flexibility and being provided on the holding sealer, thereby the leakage of non-processed exhaust gas can be restricted.

Patent Document 1: JP 2001-521847

SUMMARY OF THE INVENTION

However, as described in Patent Document 1, when the holding sealer is used in which holding sealer the protective sheet has flexibility and is placed onto the holding sealer, the holding sealer is applied with the great shearing force by friction with the inner wall of the casing when the holding sealer is press-fit into the casing. Thereby, a partial positional difference and a crowded wrinkle occur on the holding sealer after being press-fit into the casing. Because of this, there is a case where a gap is formed. Once this kind of gap is formed, there is a possibility of the non-processed exhaust leaking gas from the holding sealer at the time of use of the exhaust gas processing device regardless of the occurrence of cracks in the winding step of the holding sealer.

Accordingly, it is a general object of the present invention to provide a holding sealer which can restrict more the leakage of the exhaust gas for the holding sealer in which the protective sheet is provided on the mat base member, and also provide the exhaust gas processing device using such a holding sealer.

In order to achieve the above-mentioned object, there is provided according to one aspect of the present invention a holding sealer for a exhaust gas processing body, comprising a mat base member including inorganic fibers and a protective sheet provided on a surface of the mat base member, in which the holding sealer is formed in a rectangular shape,
wherein the protective sheet has within the surface of the protective sheet a direction with an extendability that differs from the extendability in another direction within the surface of the protective sheet, and
the protective sheet is placed on the surface of the mat base member such that a direction showing the maximum extendability of the protective sheet is arranged at an angle except zero to the long length direction of the holding sealer. When the holding sealer of the present invention is wound around the outer surface of a member like the exhaust gas processing body such that the long length direction of the holding sealer is the winding direction, and the protective sheet is the outer circumference surface and a resulting whole one body is press-fit into the casing, it is possible to restrict the occurrence of the partial positional difference and/or gaps due to the crowded wrinkle on the holding sealer advantageously by the deformation moderating effect of the protective sheet.

Additionally, in the holding sealer according to the present invention, it is preferable that the protective sheet be provided on the surface of the mat base member such that the direction showing the maximum extendability of the protective sheet is substantially perpendicular to the long length direction of the holding sealer. In this case, more good deformation moderating effect can be obtained.

Additionally, in the holding sealer according to the present invention, the protective sheet may be made by polypropylene.

Additionally, in the holding sealer according to the present invention, the mat base member may include an inorganic binder and/or an organic binder. A binding force between fibers is increased and the holding sealer made is easy to handle by adding the above binders into the mat base member.

In order to achieve the above-mentioned object, there is provided according to another aspect of the present invention, use of a holding sealer in an exhaust gas processing device comprising:

an exhaust gas processing body; and a casing housing the exhaust gas processing body and the holding sealer therein,
wherein the holding sealer comprising a mat base member including inorganic fibers and a protective sheet provided on a surface of the mat base member, in which the holding sealer is used such that the holding sealer is wound around at least a part of an outer circumference surface of the exhaust gas processing body so that the protective sheet is in contact with an inner wall of the casing,
wherein the protective sheet has within the surface of the protective sheet a direction with an extendability that differs from the extendability in another direction within the surface of the protective sheet, and
the protective sheet is placed on the surface of the mat base member such that a direction showing the maximum extendability of the protective sheet is arranged at an angle except zero to a long length direction of the holding sealer, wherein the holding sealer is further used such that the long length direction of the holding sealer corresponds to the winding direction.

The leakage of the non-processed exhaust gas from the holding sealer can be restricted due to the above effect of the protective sheet in the exhaust gas processing device according to the present invention.

Additionally, in the exhaust gas processing device according to the present invention, the exhaust gas processing body may be a catalyst carrier or an exhaust gas filter.

Therefore, according to the present invention, the leakage of the non-processed exhausted gas from the holding sealer can be restricted advantageously by using the holding sealer of the present invention for the exhaust gas processing device.

BRIEF DESCRIPTION OF THE DRAWINGS

Other objects, features and advantages of the present invention will become more apparent from the following detailed description when read in conjunction with the accompanying drawings, in which:

> Fig. 1 is an example of a structure of the holding sealer of the present invention;
> Fig. 2 is a schematic view showing a situation where the holding sealer and the exhaust gas processing body of the present invention are incorporated into the casing;
> Fig. 3 is a perspective view and its sectional view taken at A-A showing schematically a situation that a coated exhaust gas processing body having a conventional holding sealer is press-fit into the casing;
> Fig. 4 is a perspective view and its sectional view taken at B-B showing schematically a situation where a coated exhaust gas processing body having the holding sealer of the present invention is press-fit into the casing;
> Fig. 5 is a schematic view showing a method of placing a coated exhaust gas processing body into the casing by press-fit means; and
> Fig. 6 is a view showing one structural example of the exhaust gas processing device of the present invention.

<u>DESCRIPTION OF THE PREFERRED EMBODIMENTS</u>

Next, a description is given, with reference to the accompanying drawings, of an embodiment of the present invention. In the below description, the mat base member means a mat member including inorganic fiber which comprises a basic part of the holding sealer. The protective sheet means a sheet member which is placed to cover at least one surface of the mat base member. Therefore, the holding sealer of the present invention comprises the mat base member and the protective sheet. The protective sheet has within the surface of the protective sheet a direction with an extendability that differs from the extendability in another direction within the surface of the protective sheet. Also, the material of the sheet member is not limited; all sheet members showing an extension in a different direction inside the surface of the sheet including paper, plastic, non-woven fabric and silk paper can be included for the sheet member. In the following, the phrase "showing an extension" reflects of course that "there is an extendability".

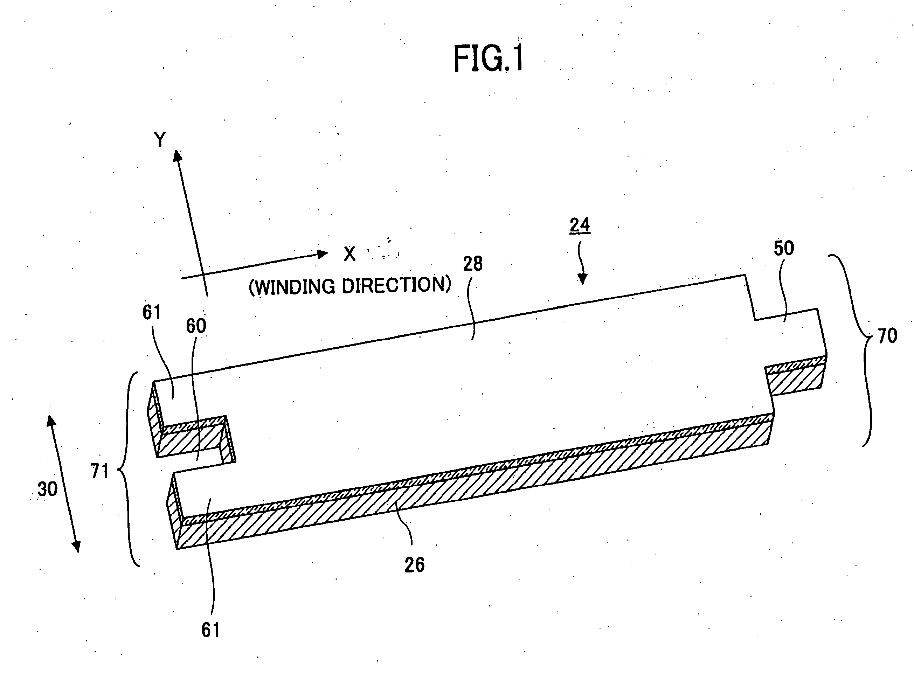

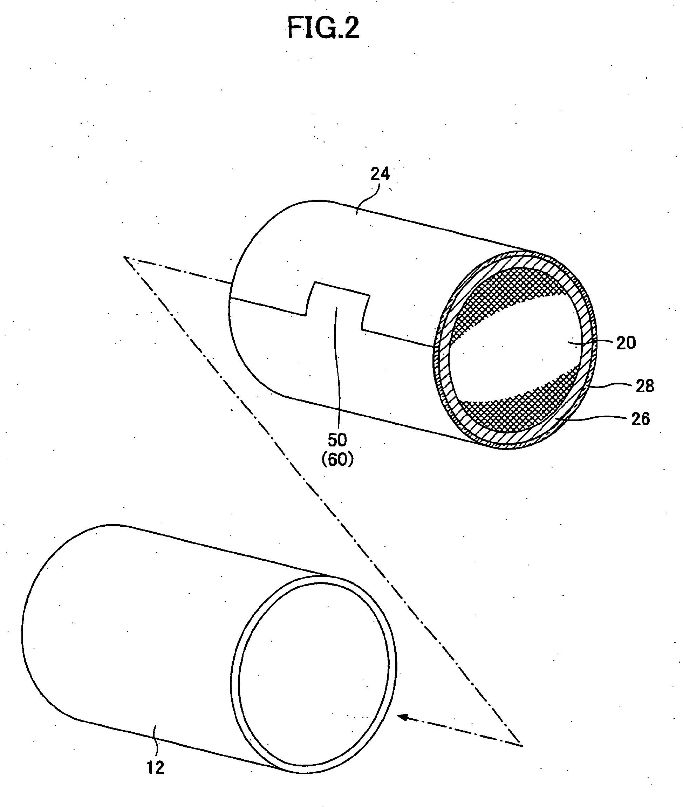

In Fig. 1, an example of a structure of the holding sealer of the present invention is shown. Also, an exploded view of the exhaust gas processing device including the holding sealer of the present invention is shown in Fig. 2.

As shown in Fig. 1, the holding sealer according to the present invention has a long length (parallel length to the X direction) and a short length (parallel length to the Y direction), and it is formed substantially as a rectangular shape. A fitting salient 50 and a fitting reentrant 60 are provided respectively on the short length 70 and 71. Also, a couple of salient parts 61 are formed at positions that are next to the fitting reentrant 60 on the short length 71. However, the short length 70 or 71 of the holding sealer of the present invention is not limited to the shape of Fig. 1, but a shape can be used of a length that does not have fitting parts as shown in Fig.1 at all or each short length has plural respective fitting salients 50 and fitting reentrants 60, and the like, for example. Also, in the specification of the present invention, "formed substantially as a rectangular shape" means a general idea including a rectangular shape having a pair of fitting salients 50 and a fitting reentrant 60 on a short length as shown in Fig. 1. Also, "formed substantially as a rectangular shape" includes a shape in which an angle between a long length and a short length is other than 90 degrees (for example, a shape having a curvature).

This holding sealer 24 is used such that the long length direction is the winding direction (X direction). When the holding sealer 24 is wound around the exhaust gas processing body 20 like the catalyst carrier, the fitting salient 50 and the fitting reentrant 60 are fitted together and the holding sealer 24 is fixed on the exhaust gas processing body 20 as shown in Fig. 2. Then, the exhaust gas processing body 20 which the holding sealer 24 is wound around (herein below, it is called the coated exhaust gas processing body) is installed into the cylindrical casing 12 made of metal and the like by the press-fit means.

Here, in the present invention, the holding sealer 24 is composed of the mat base member 26 as the base of the holding sealer and the protective sheet 28 laminated on the mat base member 26. The protective sheet 28 is placed in order to restrict the occurrence of cracks which might take place on the outer surface of the holding sealer when the holding sealer 24 is wound around the exhaust gas processing body 20 as explained in Description of the Related Art. Thus, the holding sealer 24 is wound around the exhaust gas processing body 20 such that the protective sheet 28 faces outside when the holding sealer 24 is wound around the exhaust gas processing body 20. In the example of Fig. 1, the protective sheet 28 is placed such that a direction 30 which shows the maximum extension becomes a short direction (Y direction) of the holding sealer 24, that is, the direction 30 becomes a direction which is substantially perpendicular to the winding direction.

Effects obtained from the holding sealer 24 of the present invention will be explained below in comparison to the holding sealer which has the conventional protective sheet.

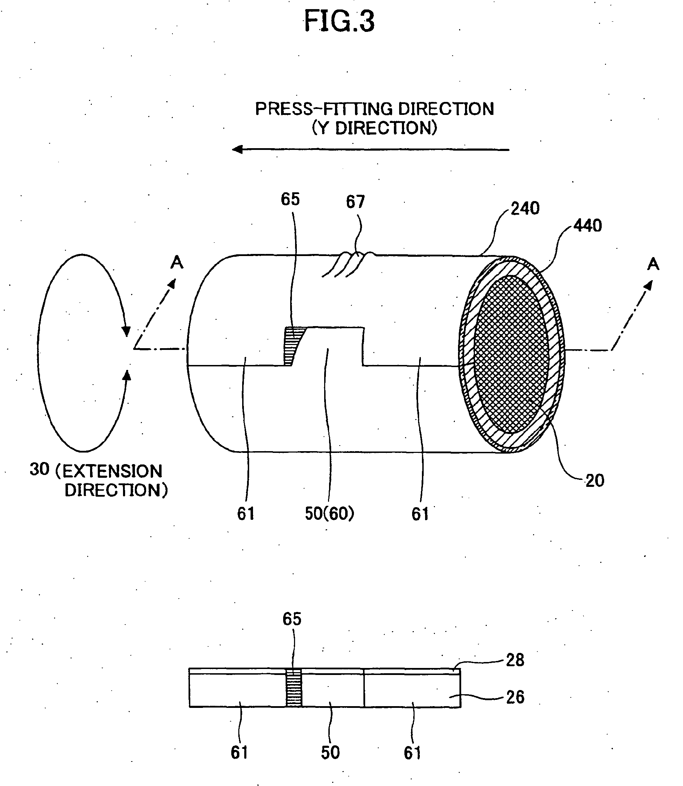

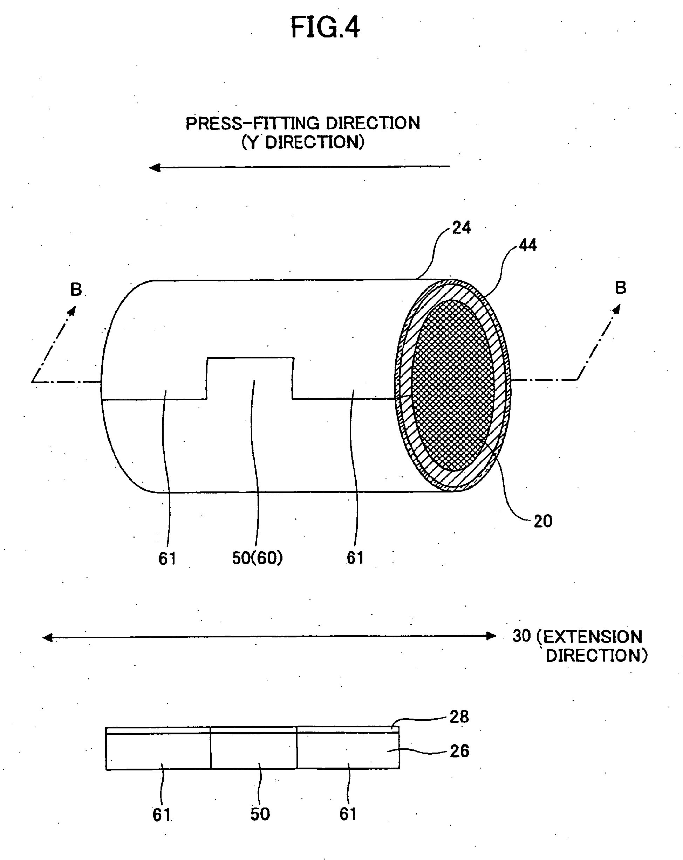

Fig. 3 and Fig. 4 show schematic perspective views of the coated exhaust gas processing bodies 440 and 44, in which the coated exhaust gas processing bodies 440 and 44 including holding sealer 240 having the conventional protective sheet and the holding sealer 24 having the protective sheet of the present invention respectively are installed in the casing 12 by the press-fit means. Also, below Fig. 3 and Fig. 4, A-A sectional view (Fig. 3) and B-B sectional view (Fig. 4) which are through the fitting part 50 (60) of respective Fig. 3 and Fig. 4 are shown. In these figures, the casing 12 is omitted for simplification.

In general, the protective sheet 28 has a different directional ability inside the surface concerning the extension. In the usual case, the protective sheet 28 is placed such that the direction 30 which shows the maximum extension is substantially parallel to the long length direction (X direction of Fig. 1) of the holding sealer 240. This is because of the easy handling of the holding sealer 240 at the time of winding around. In this case, the direction 30 which shows the maximum extension of the protective sheet 28 corresponds to a circumference direction of the coated exhaust gas processing body 440 as shown in Fig. 3. When the coated exhaust gas processing body 440 is press-fit into the casing 12 in this circumstance, it is highly likely that partial positional difference and/or the crowded wrinkle 67 will occur on the holding sealer 240 due to a frictional force to be received by the inner wall of the casing at the time of the press-fitting. Especially, such partial positional difference and/or the crowded wrinkle 67 occurs on the fitting parts, so that the fitting salient 50 and the fitting reentrant 60 are not matched and a gap 65 is formed between the fitting salient 50 and the salient part 61 which is next to the fitting salient 50 in one direction (or both directions). This kind of gap is a cause of the leakage of the non-processed exhaust gas.

On the contrary, the present invention has a characteristic that the protective sheet 28 is placed such that the direction 30 which shows the maximum extension is substantially non-parallel to the long length direction (X direction of Fig. 1) of the holding sealer 240 (for example, it is substantially perpendicular, as shown in Fig. 4). In this case, the partial positional difference and/or the crowded wrinkle 67 on the holding sealer 24 hardly take place due to the above frictional force to be received by the inner wall of the casing. It is possible for the protective sheet 28 of the present invention to be extended along the press-fitting direction, thereby a deformation of the whole holding sealer 24 is not restricted. Especially, as shown in Fig. 4, when the direction 30 which shows the maximum extension of the protective sheet 28 is placed so as to become substantially the short length direction of the holding sealer 24, this direction 30 is substantially parallel to the press-fitting direction of the coated exhaust gas processing body 44. Thereby, the direction 30 has the maximum extension ability to the press-fitting direction of the protective sheet 28, and an extremely good deformation moderation effect is provided. Therefore, the partial positional difference and/or the crowded wrinkle 67 and the gap 65 of the fitting parts as shown in Fig. 3 hardly form on the holding sealer 24 of the present invention, even though the coated exhaust gas processing body 44 is press-fit into the casing 12.

Thus, not only the occurrence of cracks on the outer circumference side of the holding sealer of the present invention when the holding sealer 24 is wound around the exhaust gas processing body 20 by the protective sheet is restricted, but also the occurrence of partial positional difference and/or the crowded wrinkle and the gap of the fitting parts on the holding sealer 24 is restricted. Therefore, it is possible to restrict advantageously the leakage of the non-processed exhaust gas due to both effects for the exhaust gas processing device using the holding sealer of the present invention.

Also, in the present invention, materials of the protective sheet 28 are not limited, but it is preferable that material be a plastic having flexibility like polypropylene, for example.

The thickness of the protective sheet 28 is not limited to a certain thickness. However, when the protective sheet is too thin, the above deformation moderation effect weakens. On the other hand, when the protective sheet is too thick, the handling of the protective sheet is hard. Thereby, it is preferable that the thickness of the protective sheet be between 1 $\mu$m and 1 mm or less. Also, the ratio of the thickness of the protective sheet 28 and the thickness of the mat base member 26 as a base is not limited to a certain ratio, but it is preferable that the ratio be in the range between about 1 : 10 and about 1 : 1000. It is more preferable that the ratio be in the range between about 1 : 50 and about 1 : 200.

Also, an adhesion method between the protective sheet 28 and the mat base member 26 is not limited to a certain method. Especially, it is preferable that both be adhesive via an adhesive including organic binders and the like.

This holding sealer 24 is wound around the outer circumference surface of the exhaust gas processing body 20 such that the protective sheet 28 faces outside (that is, the protective sheet 28 faces the casing 12) as described in the above, and ends 70 and 71 of the holding sealer are fitted together and fixed; thereby the holding sealer is used. After this, the exhaust gas processing body 20 around which the holding sealer 24 is wound is forced into the casing 12 by the press-fit means, and thereby the exhaust gas processing device is constructed.

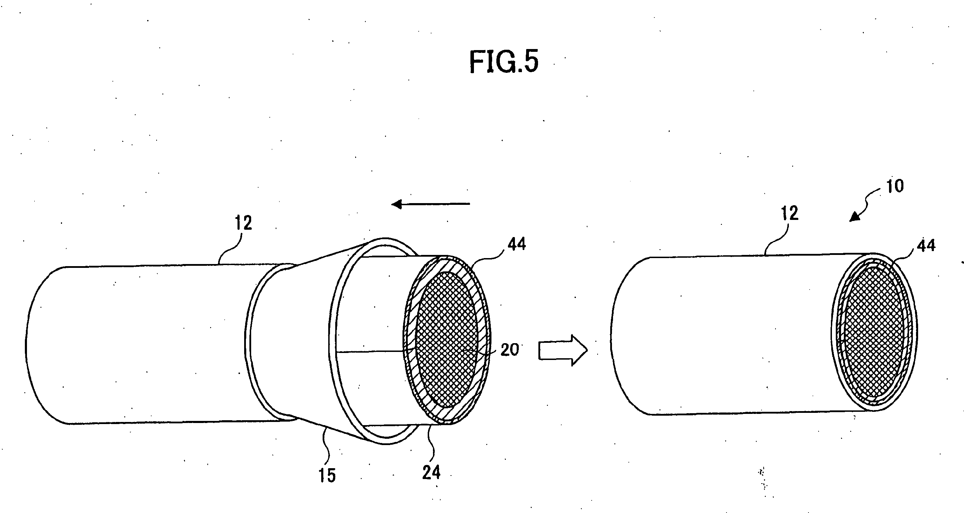

The press-fit means is a method of constructing the exhaust gas processing device 10 to place the coated exhaust gas processing body 44 at the predetermined position by pushing the coated exhaust gas processing body 44 into the casing 12 from one of the opening sides of the casing 12. In order to facilitate the insertion into the casing 12 of the coated exhaust gas processing body 44, as shown in Fig. 5, there is a case that a press-fit tool 15, in which the inner diameter is gradually decreased from one end to the other end and the minimum inner diameter is adjusted to be almost the same as the inner diameter of the casing 12, may be used. In this case, the coated exhaust gas processing body 44 is inserted from a wide inner diameter side of the press-fit tool 15, and placed into the casing 12 through the minimum inner diameter side.

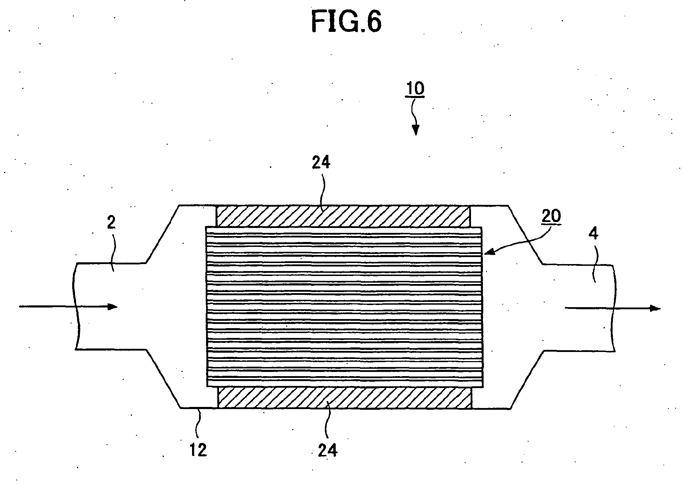

One structural example of the exhaust gas processing device 10 which is constructed in such a way is shown in Fig. 6. In the example of Fig. 6, the exhaust gas processing body 20 is a catalyst carrier having many through-holes in a parallel direction of the gas flow. For example, the catalyst carrier is composed of honeycomb-shaped porous silundum and the like. Also, the exhaust gas processing device 10 of the present embodiment is not limited to such a structure. For example, the exhaust gas processing body 20 can be DPF, in which ends of through-holes are sealed in a checkered design. In such an exhaust gas processing device, the exhaust gas which is introduced into the device is not passed through the holding sealer nor discharged without processing because of the effect of the above holding sealer (more precisely, the protective sheet).

One example of a manufacturing method of the holding sealer of the present invention is explained below.

The mat base member of the holding sealer of the present invention can be manufactured by a papermaking method. The papermaking method is also called usual wet processing, and it is a processing method for manufacturing the holding sealer through each process of mixing of fibers, stirring, opening of fibers, slurrying, paper molding and compression drying as in papermaking.

First, predetermined quantities of inorganic fiber raw materials, inorganic binders and organic binders are mixed in water. Original cotton bulk of mixed fibers of alumina and silica as inorganic fiber raw materials can be used, for example. However, inorganic fiber raw materials are not limited to the above materials; for example, inorganic fiber raw materials may be composed of only alumina and silica. Alumina sol and silica sol and the like are used as inorganic binders, for example. Also, latex and the like are used as organic binders.

Next, the obtained mixture is stirred like a papermaker, and open fiber slurry is prepared. Usually, the stirring and opening fiber process is performed for about 20-120 seconds. Then, the obtained slurry is molded in a desired shape in a molding machine, and a material mat of the mat base member is obtained by further dehydration.

Further, this material mat is compressed with a pressing machine and the like, then heated and dried at a predetermined temperature. The compression process is performed such that the density of the mat base member obtained after finishing of usual compression becomes about 0.10 g/cm$^3$ - 0.40 g/cm$^3$. The heating and drying process is performed at about 90-150 °C for about 5-60 minutes such that the material mat is placed inside a heating processing machine like an oven. The mat base member is manufactured via this kind of process.

The obtained mat base member is cut for easy handling, and is further used for cutting in a predetermined final shape.

Next, binder is coated on one side surface of the mat base member which is cut, and the protective sheet having a predetermined shape (usually, same dimensional shape as well as the one side surface of the mat base member) is stuck thereon. In this case, it is preferable for sticking of the protective sheet such that the direction obtaining the maximum extension be substantially perpendicular to the long length direction (X direction in Fig. 1) of the holding sealer after completion. However, the direction obtaining the maximum extension of the protective sheet is not limited to the above. The direction obtaining the maximum extension of the protective sheet may be any direction except the long length direction of the holding sealer in the case of obtaining the above effect for the holding sealer.

The binder is not limited to a certain binder, but the organic resin is preferable for the binder. It is preferable to use acrylic resin (ACM), acrylnitryl-butadiene gum (NBR), and stylene-butadiene gum (SBR) as organic binders. Also, it is preferable that the amount of organic binder be between 1.0 and 10.0 weight% for the mat base member. If the amount of organic binder is less than 1.0 weight%, an adhesive effect of the protective sheet can not be obtained sufficiently. Also, if the amount of organic binder is greater than 10.0 weight%, the amount of the organic contents which is discharged at the time of use of the exhaust gas processing device is increased.

In the next step, by the heat compression drying method, the binder is dried and solidified. Thereby, the protective sheet is adhered on the mat base member. The drying process is performed around 95-155 °C. If the temperature is lower than 95 °C, the drying time takes more time and production efficiency decreases. Also, if the drying temperature is higher than 155 °C in the case of using organic binders, decomposition of organic binders themselves begins to start and adhesive performance due to organic binders is lost.

Thus, the holding sealer in which the protective sheet showing the maximum extension in a desired arranging direction is placed on the surface of the mat base member can be obtained. Thereby, the exhaust gas processing device in which the leakage of the non-processed exhaust gas is advantageously restrained can be obtained by using the holding sealer according to the present invention.

Below, effects of the present invention will be explained using examples.

Examples

In order to verify effects of the present invention, each kind of examination was performed using the holding sealer of the present invention. The holding sealer was manufactured by following procedures.

Manufacturing 1 of the holding sealer

Original cotton bulk of alumina fibers 1200 g, organic binder (latex) 60 g, inorganic binder (alumina sol) 12 g and water were added, and the mixture was mixed with so that the fiber density in a material solution became 5 weight%. Then, the material solution was stirred in a papermaker for 60 seconds. Thus, the material solution which was stirred and opened fiber was moved to the molding machine having a dimension of 930 mm x 515 mm x 400 mm. Then, the material mat of alumina fibers was obtained by removing water via a mesh placing on a bottom surface of the molding machine. In the next, the material mat was press-dried for 30 minutes at 120 °C and a mat base member having 14 mm of thickness and 0.19 g/cm$^3$ density was obtained.

About 30 ml of the latex (about 5 wt% to the weight of the mat base member) was coated on one side surface of the mat base member, PP (polypropylene) non-woven fabric A (product name: ELTAS, P03015, Asahi-Kasei Seni) is provided thereon. The PP non-woven fabric A is provided on the mat base member such that the direction having the maximum extension is substantially parallel to the short length direction of the holding sealer sample after completion. Next, the latex was dried and rigidified at temperature of 120 °C and pressure of 30 kPa, then the mat base member and the PP non-woven fabric A were adhered. This mat base member was cut in a dimension having 200 mm of the vertical length (Y direction) and 440 mm of the horizontal length (X direction) (excluding the fitting salient and the fitting reentrant) of the shape shown in Fig. 1, thereby the holding sealer sample was obtained. The holding sealer sample which was obtained in the above is set as an example 1. Also, a holding sealer sample was manufactured in a method for placing the protective sheet on the mat base member such that the direction having the maximum extension of the PP non-woven fabric A is substantially parallel to the long length direction of the holding sealer sample in the same method in the example 1. This sample is set as a comparative example 1.

Next, holding sealers of an example 2 in which PP non-woven fabric B (product name: ELTAS, PO3020, Asahi-Kasei Seni) having different expansion and contraction capabilities as the protective sheet was used and a comparative example 2 were manufactured in the same method as the example 1. In the example 2, the protective sheet was placed such that the direction having the maximum extension of the protective sheet is substantially parallel to the short length of the holding sealer sample. In the comparative example 2, the protective sheet was placed such that the direction having the maximum extension of the protective sheet is substantially parallel to the long length of the holding sealer sample.

Further, holding sealers of an example 3 in which PP non-woven fabric C (product name: ELTAS, PO3030, Asahi-Kasei Seni) having different an expansion and contraction ability as the protective sheet was used and a comparative example 3 were manufactured in the same method as the example 1. In the example 3, the protective sheet was placed such that the direction having the maximum extension of the protective sheet is substantially parallel to the short length of the holding sealer sample. In the comparative example 3, the protective sheet was placed such that the direction having the maximum extension of the protective sheet is substantially parallel to the long length of the holding sealer sample.

In addition, a holding sealer of a comparative example 4, in which PET (polyethylene telephthalate) having different an expansion and contraction capability and PE (polyethylene) non-woven fabric D (product name: ELTAS, EW5015, Asahi-Kasei Seni) as the protective sheet was used, was manufactured in the same method as the example 1. In the comparative example 4, the protective sheet was placed such that the direction having the maximum extension of the protective sheet is substantially parallel to the long length of the holding sealer sample.

Data like thickness, pulling strength, extension amount and other characteristics of samples for evaluation concerning examples 1-3 and comparative examples 1-4 are shown in Table 1.

**Table 1**

| NO. | MATERIAL OF PROTECTIVE SHEET (SPECIFI-CATION) | THICKNESS OF PROTECTIVE SHEET (mm) | THICKNESS OF MAT (mm) | RATIO OF CIRCUM-FERENTIAL DIFFERENCE (%) | PULLING STRENGTH (N/3cm) | | EXTENSION AMOUNT (%) | | RELATIONSHIP BETWEEN THE MAXIMUM EXTENSION DIRECTION (HORIZONTAL DIRECTION) OF THE PROTECTIVE SHEET AND THE WINDING DIRECTION OF THE HOLDING SEALER | LEAKAGE AMOUNT (m·cm/kPa/sec) | RESULT OF WINDING EXAMI-NATION |
|---|---|---|---|---|---|---|---|---|---|---|---|
| | | | | | VERTICAL DIRECTION | HORIZONTAL DIRECTION | VERTICAL DIRECTION | HORIZONTAL DIRECTION | | | |
| EXAMPLE 1 | PP NONWOVEN FABRIC A | 0.13 | 14.3 | 22.6 | 25.5 | 6.1 | 46.2 | 59.7 | PERPENDICULAR | 0.04 | O |
| EXAMPLE 2 | PP NONWOVEN FABRIC B | 0.16 | 14.3 | 22.6 | 34.2 | 9.6 | 44.9 | 63.2 | PERPENDICULAR | 0.05 | O |
| EXAMPLE 3 | PP NONWOVEN FABRIC C | 0.23 | 14.3 | 22.6 | 50.8 | 13.5 | 45.1 | 57.6 | PERPENDICULAR | 0.05 | O |
| COMPARATIVE EXAMPLE 1 | PP NONWOVEN FABRIC A | 0.13 | 14.3 | 22.6 | 25.5 | 6.1 | 46.2 | 59.7 | PARALLEL | 0.10 | O |
| COMPARATIVE EXAMPLE 2 | PP NONWOVEN FABRIC B | 0.16 | 14.3 | 22.6 | 34.2 | 9.6 | 44.9 | 63.2 | PARALLEL | 0.12 | O |
| COMPARATIVE EXAMPLE 3 | PP NONWOVEN FABRIC C | 0.23 | 14.3 | 22.6 | 50.8 | 13.5 | 45.1 | 57.6 | PARALLEL | 0.12 | O |
| COMPARATIVE EXAMPLE 4 | PET+PE NONWOVEN FABRIC | 0.08 | 14.1 | 22.2 | 22.1 | 6.2 | 12.8 | 13.7 | PARALLEL | 0.19 | × |

PP : POLYPROPYLENE, PET : POLYETHYLENE TELEPHTHALATE, PE : POLYETHYLENE

In the Table 1, a ratio of circumferential difference (P) is an index expressing the difference between an outer circumference (LO) and an inner circumference (LI) of the holding sealer occurring when the holding sealer is wound around. It is expressed as the following formula.

$$\textbf{P = (LO-LI) / LI x 100 \quad (1)}$$

Also, the pulling strength and the extension amount for each protective sheet were measured following the description in "standard time examination" of JIS-L1906 (general length fiber - non-woven fabric examination method).

Examination for evaluating

Next, a leakage examination and a winding examination were performed using each holding sealer sample manufactured in the above method.

The leakage examination was performed as follows. First, each holding sealer sample is wound around on a cylinder (a non-hollow body) having an outer diameter 5 inches, and both ends of the holding sealer sample are fitted and fixed on the cylinder. Next, this unified member is forced into a metallic casing by the press-fit means, and this resulting member is as a sample body. The density of the holding sealer after forcing (that is, the measured weight of the holding sealer before forcing / the thickness of the holding sealer after forcing into the casing) was 0.45 g/cm$^3$. Then, the resulting member is placed on a tool having almost the same inner diameter as the outer shape of the casing. Under this condition, air which has a known pressure and speed is blown into the sample body along an axis direction of the sample body from one side of the sample body to the other side of the sample body. The amount of air which is discharged from the sample body is measured using a meter to measure the amount of air arriving on the other side of the axis direction of the sample body. According to the above examination, the leakage amount is calculated as follows.

$$\textbf{The leakage amount (m·cm/kPa/sec) = speed of the discharged air (m/sec)/[inflow pressure (kPa)/length of sample in an inflow direction (cm)]}$$

Also, in the winding examination, it evaluated whether a sample is cracked by observing with human eyes when each holding sealer sample is wound around on the cylinder having the outer diameter 5 inches, and both ends of the holding sealer sample are fitted and fixed on the cylinder as the above.

Results of the examination

Results of the leakage examination and the winding examination for each sample are shown in Table 1. Based on results of the leakage examination, it is recognized that the leakage amount of the exhaust gas for the holding sealer of examples 1-3 is advantageously decreased compared to the holding sealer of the comparative examples 1-4. This is because that the direction showing the maximum extension of the protective sheet is substantially perpendicular to the winding direction for the holding sealer of examples 1-3; thereby good deformation moderation effect is provided.

On the other hand, based on results of the winding examination, it is recognized that the winding capability of the holding sealer does not so much depend on materials of the protective sheet and the direction having its maximum extension and cracks on the protective sheet does not occur even though the direction having the maximum extension of the protective sheet is either the short length direction or the long length direction of the holding sealer. However, it is recognized that cracks on the protective sheet occur for the holding sealer of the comparative example 4 after the examination. This is because that the extension amount for the winding direction of the protective sheet is smaller than the ratio of circumferential difference (P). Thereby, it is necessary that the extension amount for the winding direction of the protective sheet be at least greater than the ratio of circumferential difference (P).

Industrial Applicability

The holding sealer and the exhaust gas processing device according to the present invention are applicable to the exhaust gas processing units and the like for vehicles.

**Claims**

1. A holding sealer (24) for an exhaust gas processing body comprising a mat base member (26) including inorganic fibers and a protective sheet (28) provided on a surface of the mat base member (26), in which the holding sealer (24) is formed as a rectangular shape,
   wherein the protective sheet (28) has within the surface of the protective sheet (28) a direction with an extendability that differs from the extendability in another direction within the surface of the protective sheet (28), and
   the protective sheet is placed on the surface of the mat base member (26) such that a direction having the maximum extendability of the protective sheet is arranged at an angle except zero to a long length direction (x-direction) of the holding sealer (24).

2. The holding sealer (24) as claimed in claim 1,
   wherein the protective sheet (28) is provided on the surface of the mat base member (26) such that the direction showing the maximum extendability of the protective sheet (28) is substantially perpendicular to the long length direction (x-direction) of the holding sealer (24).

3. The holding sealer (24) as claimed in claim 1 or 2,
   wherein the protective sheet (28) is made by polypropylene.

4. The holding sealer as claimed in any of claims 1 to 3,
   wherein the mat base member (26) includes an inorganic binder and/or an organic binder.

5. Use of a holding sealer (24) in an exhaust gas processing device (10) which comprises an exhaust gas processing body (44) and a casing housing the gas processing body and the holding sealer therein, wherein the holding sealer comprises a mat base member (26) including inorganic fibers and a protective sheet (28) provided on a surface of the mat base member (26), in which the holding sealer (24) is formed as a rectangular shape,
   wherein the protective sheet (28) has within the surface of the protective sheet (28) a direction with an extendability that differs from the extendability in another direction within the surface of the protective sheet (28), and
   the protective sheet is placed on the surface of the mat base member (26) such that a direction having the maximum extendability of the protective sheet is arranged at an angle except zero to a long length direction (x-direction) of the holding sealer (24),
   wherein the holding sealer is used such that the holding sealer (24) is wound around at least a part of an outer circumference surface of the exhaust processing body so that the protective sheet is in contact with an inner wall of the casing and the long length direction of the holding sealer corresponds to the winding direction.

**6.** Use as claimed in claim 5,
wherein the exhaust gas processing body is a catalyst carrier or an exhaust gas filter.


**Patentansprüche**

**1.** Haltedichtung (24) für einen Abgasverarbeitungskörper, umfassend ein Mattenbasiselement (26), das anorganische Fasern enthält, und eine Schutzlage (28), die auf einer Oberfläche des Mattenbasiselements (26) vorgesehen ist, in der die Haltedichtung (24) als eine rechteckförmige Gestalt ausgebildet ist,
bei welcher die Schutzlage (28) innerhalb der Oberfläche der Schutzlage (28) eine Richtung mit einer elastischen Dehnung aufweist, die sich von der elastischen Dehnung in der anderen Richtung in der Oberfläche der Schutzlage (28) unterscheidet, und
die Schutzlage auf der Oberfläche des Mattenbasiselements (26) so angeordnet ist, dass eine Richtung, welche die maximale elastische Ausdehnung der Schutzlage aufweist, in einem Winkel, mit Ausnahme von Null, bezüglich einer langen Längsrichtung (X-Richtung) der Haltedichtung (24) angeordnet ist.

**2.** Haltedichtung (24) nach Anspruch 1, bei der die Schutzlage (28) auf der Oberfläche des Mattenbasiselements (26) so vorgesehen ist, dass die Richtung, welche die maximale elastische Ausdehnung der Schutzlage (28) zeigt, im Wesentlichen senkrecht auf der langen Längsrichtung (X-Richtung) der Haltedichtung (24) steht.

**3.** Haltedichtung (24) nach Anspruch 1 oder 2, bei der die Schutzlage (28) aus Polypropylen gefertigt ist.

**4.** Haltedichtung nach einem der Ansprüche 1 bis 3, bei der das Mattenbasiselement (26) ein anorganisches Bindemittel und/oder ein organisches Bindemittel enthält.

**5.** Verwendung einer Haltedichtung (24) in einer Abgasverarbeitungseinrichtung (10), die einen Abgasverarbeitungskörper (44) und ein Gehäuse umfasst, das den Abgasverarbeitungskörper und die Haltedichtung darin aufnimmt, wobei die Haltedichtung ein Mattenbasiselement (26), das anorganische Fasern enthält, und eine Schutzlage (28) umfasst, die auf der Oberfläche des Mattenbasiselements (26) vorgesehen ist, in der die Haltedichtung (24) als eine rechteckförmige Gestalt ausgebildet ist,
wobei die Schutzlage (28) innerhalb der Oberfläche der Schutzlage (28) eine Richtung mit einer elastischen Ausdehnung aufweist, die sich von der elastischen Ausdehnung in einer anderen Richtung innerhalb der Oberfläche der Schutzlage (28) unterscheidet, und
die Schutzlage auf der Oberfläche des Mattenbasiselements (26) so angeordnet ist, dass eine Richtung, welche die maximale elastische Ausdehnung der Schutzlage aufweist, in einem Winkel, mit Ausnahme von Null, bezüglich einer langen Längsrichtung (X-Richtung) der Haltedichtung (24) angeordnet ist,
wobei die Haltedichtung so verwendet wird, dass die Haltedichtung (24) um wenigstens einen Teil einer äußeren Umfangsoberfläche des Abgasverarbeitungskörpers so gewickelt ist, dass sich die Schutzlage mit einer Innenwand des Gehäuses in Kontakt befindet, und die lange Längsrichtung der Haltedichtung der Wicklungsrichtung entspricht.

**6.** Verwendung nach Anspruch 5, wobei der Abgasverarbeitungskörper ein Katalysatorträger oder ein Abgasfilter ist.


**Revendications**

**1.** Support d'étanchéité (24) pour un corps de traitement de gaz d'échappement comportant un élément de base formant mat (26) incluant des fibres inorganiques et une feuille protectrice (28) agencée sur une surface de l'élément de base formant mat (26), dans lequel le support d'étanchéité (24) est formé comme une forme rectangulaire,
dans lequel la feuille protectrice (28) a, dans la surface de la feuille protectrice (28), une direction ayant une capacité d'extension qui diffère de la capacité d'extension dans une autre direction dans la surface de la feuille protectrice (28), et
la feuille protectrice est placée sur la surface de l'élément de base formant mat (26) de telle sorte qu'une direction ayant la capacité d'extension maximale de la feuille protectrice est disposée à un angle non nul par rapport à une direction de grande longueur (direction x) du support d'étanchéité (24).

**2.** Support d'étanchéité (24) comme revendiqué dans la revendication 1,
dans lequel la feuille protectrice (28) est agencée sur la surface de l'élément de base formant mat (26) de telle sorte que la direction présentant la capacité d'extension maximale de la feuille protectrice (28) est sensiblement perpendiculaire à la direction de grande longueur (direction x) du support d'étanchéité (24).

3. Support d'étanchéité (24) comme revendiqué dans la revendication 1 ou 2,
dans lequel la feuille protectrice (28) est constituée de polypropylène.

4. Support d'étanchéité comme revendiqué dans l'une quelconque des revendications 1 à 3,
dans lequel l'élément de base formant mat (26) inclut un liant inorganique et/ou un liant organique.

5. Utilisation d'un support d'étanchéité (24) dans un dispositif de traitement de gaz d'échappement (10) qui comporte un corps de traitement de gaz d'échappement (44) et un carter recevant le corps de traitement de gaz d'échappement et le support d'étanchéité à l'intérieur, dans laquelle le support d'étanchéité comporte un élément de base formant mat (26) incluant des fibres inorganiques et une feuille protectrice (28) agencée sur une surface de l'élément de base formant mat (26), dans laquelle le support d'étanchéité (24) est formé comme une forme rectangulaire, dans laquelle la feuille protectrice (28) a, dans la surface de la feuille protectrice (28), une direction ayant une capacité d'extension qui diffère de la capacité d'extension dans une autre direction dans la surface de la feuille protectrice (28), et
la feuille protectrice est placée sur la surface de l'élément de base formant mat (26) de telle sorte qu'une direction ayant la capacité d'extension maximale de la feuille protectrice est disposée à un angle non nul par rapport à une dimension de grande longueur (direction x) du support d'étanchéité (24),
dans laquelle le support d'étanchéité est utilisé de telle sorte que le support d'étanchéité (24) est enroulé au moins autour d'une partie d'une surface circonférentielle extérieure du corps de traitement de gaz d'échappement de telle sorte que la feuille protectrice est en contact avec une paroi intérieure du carter et la direction de grande longueur du support d'étanchéité correspond à la direction d'enroulement.

6. Utilisation comme revendiqué dans la revendication 5,
dans laquelle le corps de traitement de gaz d'échappement est un support de catalyseur ou un filtre de gaz d'échappement.

# FIG.1

EP 1 895 119 B1

# FIG.2

# FIG.3

PRESS-FITTING DIRECTION
(Y DIRECTION)

65    67    240    440

A    A

65

30 (EXTENSION
DIRECTION)

61    50(60)    61    20

65

28

26

61    50    61

# FIG.4

PRESS-FITTING DIRECTION
(Y DIRECTION)

B

24

44

B

61    50(60)    61

20

30 (EXTENSION
    DIRECTION)

28

26

61    50    61

# FIG.5

EP 1 895 119 B1

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001521847 A